# EUROPEAN PATENT SPECIFICATION

(11) **EP 4 597 324 B1**
(45) Date of publication and mention of the grant of the patent: **17.12.2025**
(21) Application number: 24210884.3
(22) Date of filing: 05.11.2024
(51) Int. Cl.: G06F 11/24, G06N 20/00

(54) **COMPLIANCE TESTING SYSTEM AND COMPLIANCE TESTING METHOD**
KONFORMITÄTSTESTSYSTEM UND KONFORMITÄTSTESTVERFAHREN
SYSTÈME DE TEST DE CONFORMITÉ ET PROCÉDÉ DE TEST DE CONFORMITÉ

(30) Priority: 30.01.2024 US 202418426678
(43) Date of publication of application: 06.08.2025
(73) Proprietor: Rohde & Schwarz GmbH & Co. KG, 81671 München (DE)
(72) Inventor: Derat, Benoit, 81671 München (DE)
(74) Representative: Novagraaf Group

(56) References cited:
- US-A1- 2023 205 670

## Description

The present invention generally relates to a compliance testing system for testing an electronic device under test. The present invention further relates to a compliance testing method of testing an electronic device under test.

Certain types of electronic devices, for example mobile communication devices such as smartphones, have to be tested in order to ensure that the device under test complies with the relevant regulations and standards in the respective country.

With the ever increasing diversity of the electronic devices, communication standards and regulations, it becomes increasingly more difficult to select the appropriate compliance tests for a specific device under test.

Accordingly, highly skilled personnel is required for selecting the appropriate compliance tests, for example for an admission procedure before the responsible state authority.

US 2023/205670 A1 refers to checking performances of an application on a target equipment of a vehicle before validating said application into an application catalog of a vehicle equipment manufacturer. In particular, the safety of the application according to the regulation in different countries and the compatibility with different kind of vehicles is checked. Thereby, also machine-learning is used.

Thus, for the object of the present invention is to provide a compliance testing system and a compliance testing method that facilitate the selection of compliance tests for electronic devices under test.

The invention is defined by the appended independent claims.

According to the present invention, the problem is solved by a compliance testing system for testing an electronic device under test. The compliance testing system comprises a user interface, a machine-learning circuit, and a database. The database comprises compliance testing data, wherein the compliance testing data comprises information on regulations and standards for performing compliance tests on different devices under test. The user interface is configured to receive a user input, wherein the user input comprises text and/or speech relating to the device under test to be tested. The machine-learning circuit is configured to determine which regulations and standards are applicable to the device under test to be tested based on the user input. The machine-learning circuit is configured to generate a set of rules describing the application of the applicable regulations and standards to the device under test that is to be tested. The machine-learning circuit is configured to generate test data based on the generated set of rules, wherein the test data comprises information on compliance tests to be performed on the device under test in view of the applicable regulations and standards.

Therein and in the following, the term "circuit" is understood to describe suitable hardware, suitable software, or a combination of hardware and software that is configured to have a certain functionality.

In other words, the term "circuit" is understood to denote a module having suitable hardware, suitable software, or a combination of hardware and software that is configured to perform the respective functionality.

The hardware may, inter alia, comprise a CPU, a GPU, an FPGA, an ASIC, or other types of electronic circuitry.

The compliance testing system according to the present invention is based on the idea to facilitate selecting the appropriate compliance tests by providing a machine-learning circuit that is pre-trained to select the appropriate compliance tests based on the user input.

Therein, the user may formulate the user input in natural language, for example "I want to test a smartphone supporting 5G in the frequency range between 3.3 GHz and 3.8 GHz".

In fact, the user may enter a corresponding text via the user interface.

Alternatively or additionally, the user interface may have a speech-to-text functionality, such that the user can formulate the user input as speech, which is then converted into a corresponding text by the user interface.

The machine-learning circuit processes the user input by means of any suitable type of language-processing technique, particularly by any suitable language-processing technique known in the state of the art, thereby extracting input data regarding the device under test to be tested.

In fact, the machine-learning circuit may be configured to extract key words and/or key phrases from the user input, i.e. the extracted input data may comprise key words and/or key phrases.

In the exemplary user input described above, the key words and/or key phrases may be "smartphone", "5G", and "frequency range between 3.3 GHz and 3.8 GHz".

In fact, the machine-learning circuit may further be configured to process text documents describing different regulations and standards, and may extract the corresponding compliance testing data from the text documents.

For example, the machine-learning circuit may be configured to extract key words and/or key phrases from the text documents describing the different regulations and standards, i.e. the compliance testing data may comprise the key words and/or key phrases relating to the different regulations and standards.

The machine-learning circuit is pre-trained to match the extracted input data to the data base or rather to the extracted compliance testing data, thereby determining which regulations and standards are applicable to the device under test to be tested.

The determined set of rules corresponds to a link or rather to a map between the applicable regulations and standards and the compliance tests to be performed on the device under test to be tested.

Accordingly, the machine-learning circuit automatically determines which compliance tests are to be performed on the device under test to be tested based on the generated set of rules. Thus, the expertise required from the user for selecting the correct compliance tests is reduced considerably, as the user only has to describe the device under test to be tested, and the correct compliance tests are automatically selected by the machine-learning circuit.

For example, the machine-learning circuit may comprise at least one artificial neural network that is configured to perform the functionality described above and hereinafter.

According to an aspect of the present invention, the test data comprises information on individual test steps and/or test sequences to be performed on the device under test in view of the applicable regulations and standards. In other words, the machine-learning circuit may be configured to automatically determine specific compliance tests and the corresponding measurement steps that are necessary for the respective compliance test. Thus, the expertise required for selecting the compliance tests is further reduced.

In an embodiment of the present invention, the test data comprises a list of the applicable regulations and standards. Thus, the user may be automatically informed about the regulations and standards that are relevant for testing the specific device under test to be tested. For example, the user may use this information for verifying the compliance tests selected by the machine-learning circuit.

According to another aspect of the present invention, the test data comprises machine-readable instructions for at least one test instrument performing the compliance tests. In fact, the machine-readable instructions may be configured such that at least one test instrument can automatically set its operational parameters for performing the compliance tests. Alternatively or additionally, the machine-readable instructions may be configured such that the at least one test instrument is controlled to automatically perform the compliance tests. Thus, the compliance testing system according to the present invention allows for highly automated compliance testing, which further reduces the expertise required from the user.

In a further embodiment of the present invention, the compliance testing system further comprises a visualization circuit, wherein the visualization circuit is configured to generate visualization data based on the test data. Thus, the test data may be displayed to the user in an illustrative way.

The visualization data may be displayed on a display, particularly on a display of a test instrument, an external display, or on a display of a computing device, such as a personal computer, a laptop, a smartphone, a table, or another type of smart device.

Another aspect of the present invention provides that the machine-learning circuit is configured to determine whether the user input is sufficient in order to generate the set of rules and/or in order to determine which regulations and standards are applicable to the device under test to be tested. In other words, the machine-learning circuit automatically determines whether sufficient information on the device under test is comprised in the user input for determining the applicable regulations and standards and/or for determining the set of rules.

For example, the user input may comprise the query "I want to test a smartphone supporting 5G". This information may not be sufficient, as different countries may have different regulations regarding the allowable frequency ranges associated with the 5G standard.

The machine-learning circuit may be configured to generate a user query if it is determined that the user input is insufficient, wherein the user query generated queries information on data missing in the user input. In other words, the machine-learning circuit may be configured to automatically determine which additional information on the device under test is required for determining the applicable regulations and standards and/or for determining the set of rules. The machine-learning circuit may further be configured or rather pre-trained to automatically query the user for the missing information.

In the example given above, the user query may be "Please input the designated countries in which the smartphone is to be deployed".

The visualization circuit described above may be configured to generate visualization data associated with the user query generated, and the visualization data may be displayed on a display.

In a further embodiment of the present invention, the user query is formulated in natural language. In other words, the compliance test system is configured to have a conversation with the user in natural language, which facilitates the user in understanding which further information is required.

For example, the compliance testing system may be configured to initiate a chat with the user, wherein the user query generated is presented to the user in the chat. The user may reply directly in the chat, for example by entering the requested additional information.

In fact, the machine-learning circuit may generate further user queries until the user has entered all information necessary for determining the applicable regulations and standards and/or for determining the set of rules.

An aspect of the present invention provides that the machine-learning circuit is configured to determine whether the compliance testing data is sufficient in order to generate the set of rules. In other words, the machine-learning circuit may be configured to automatically determine whether the existing regulations and standards applicable to the device under test to be tested comprise enough information in order to determine the compliance tests to be performed.

For example, the existing regulations and standards may not cover all aspects of the performance of a newly developed device under test. In this case, the machine-learning circuit may determine that the compliance testing data is insufficient for generating the set of rules.

According to another aspect of the present invention, the machine-learning circuit is configured to generate a user message if it is determined that the compliance testing data is insufficient in order to generate the set of rules, wherein the user message comprises information on data missing in the compliance testing data. Thus, the user may be informed that the existing regulations and standards do not cover all information necessary for determining the compliance tests to be conducted. Further, the user may be informed on which information is missing in the existing regulations and standards.

In a further embodiment of the present invention, the user message comprises information on an authority responsible for the relevant regulations and standards. Thus, the user is informed on which authority is to be contacted regarding the regulations and standards applicable to the device under test to be tested.

Therein and in the following, the term "authority" is understood to denote an institution that is responsible for regulations and standards governing different aspects of the performance of the device under test to be tested in the respective country.

For example, the authority governing the rules and regulations relating to radio devices in the United States is the Federal Communications Commission (FCC), while in the European Union the corresponding rules and regulations are governed by the individual state authorities that are organized in the European Regulators Group (ERG).

Particularly, the user message may comprise a pre-formulated query to the authority. In fact, the pre-formulated query may comprise a query for the data or information missing in the existing regulations and standards. Thus, the user is assisted in acquiring the necessary additional standard and regulation information from the responsible authority.

According to a further aspect of the present invention, the user interface is configured to receive feedback data, wherein the feedback data comprises information on errors in the set of rules and/or in the test data, and wherein the machine-learning circuit is configured to adjust its operational parameters in order to minimize the error. In other words, the machine-learning circuit may be trained or re-trained based on the feedback data, such that the accuracy of the determined regulations and standards being applicable to the device under test to be tested, the accuracy of the generated set of rules, and/or the accuracy of the generated test data is enhanced.

For example, the feedback data may be provided by the user.

As another example, the feedback data may be provided by an expert or by a group of experts. For example, it is also conceivable that the determined regulations and standards being applicable to the device under test to be tested, the determined set of rules, and/or the determined test data may be accessed via a cloud computing network, particularly together with the corresponding user input, wherein a plurality of experts can access this information and provide the feedback data. This way, the machine-learning circuit can be trained or re-trained without an expert being present in a testing facility comprising the compliance testing system.

Another aspect of the present invention provides that the compliance testing system further comprises at least one test instrument, wherein the at least one test instrument is configured to determine whether the at least one test instrument is capable of performing the compliance tests to be performed on the device under test based on the test data. In other words, the test instrument may check whether the at least one test instruments fulfills requirements of the compliance tests to be performed, such as necessary frequency analysis ranges, necessary frequency generator ranges, a necessary bandwidth, a necessary sample rate, necessary error correction capabilities, a target measurement accuracy etc. Thus, it is ensured that the selected compliance tests can actually be performed by the at least one test instrument.

The machine-learning circuit may be configured to generate a user query if it is determined that the at least one test instrument is not capable of performing the tests, wherein the user query comprises information on necessary adaptations of a test setup and/or necessary changes to the compliance tests to be performed.

Thus, the user may be informed about necessary changes to the test setup comprising the at least one test instrument. For example, the user query may comprise information about necessary additional test instruments or a necessary replacement of the at least one test instrument.

Alternatively or additionally, the user may be informed about necessary changes to the compliance tests to be conducted, for example a reduction of a frequency range to be tested, a lowered target measurement accuracy, etc.

According to an aspect of the present invention, the compliance testing system further comprises at least one test instrument, wherein the at least one test instrument is configured to perform the compliance tests to be performed on the device under test, thereby obtaining measurement data, and wherein the machine-learning circuit is configured to generate a test report based on the measurement data. Thus, the user is assisted in generating the test report for the compliance tests performed.

In fact, the machine-learning circuit may be configured to generate the test report in a format required by the authority responsible for the applicable regulations and standards. Thus, the user is for example assisted in providing the measurement data for an admission procedure of the device under test before the responsible authority.

In an embodiment of the present invention, the test report is formulated in natural language. Thus, the test report is presented to the user in an easily understandable fashion.

According to the present invention, the problem further is solved by a compliance testing method of testing an electronic device under test. The compliance testing method comprises the steps of
- receiving, by a user interface, a user input, wherein the user input comprises text and/or speech relating to the device under test to be tested;
- determining, by a machine-learning circuit, which regulations and standards are applicable to the device under test to be tested based on the user input and based on compliance testing data, wherein the compliance testing data comprises information on regulations and standards for performing compliance tests on different devices under test;
- generating, by the machine-learning circuit, a set of rules describing the application of the applicable regulations and standards to the device under test that is to be tested; and
- generating, by the machine-learning circuit, test data based on the generated set of rules, wherein the test data comprises information on compliance tests to be performed on the device under test in view of the applicable regulations and standards.

In fact, the compliance testing system described above may be configured to perform the compliance testing method.

Regarding the advantages and further properties of the compliance testing method, reference is made to the explanations given above with respect to the compliance testing system, which also hold for the compliance testing method and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a compliance testing system according to the present disclosure;
- Figure 2 shows a flow chart of a compliance testing method according to the present disclosure;
- Figure 3 shows a machine-learning circuit of the compliance testing system of Figure 1 in more detail; and
- Figure 4 shows a further flow chart of a compliance testing method according to the present disclosure.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

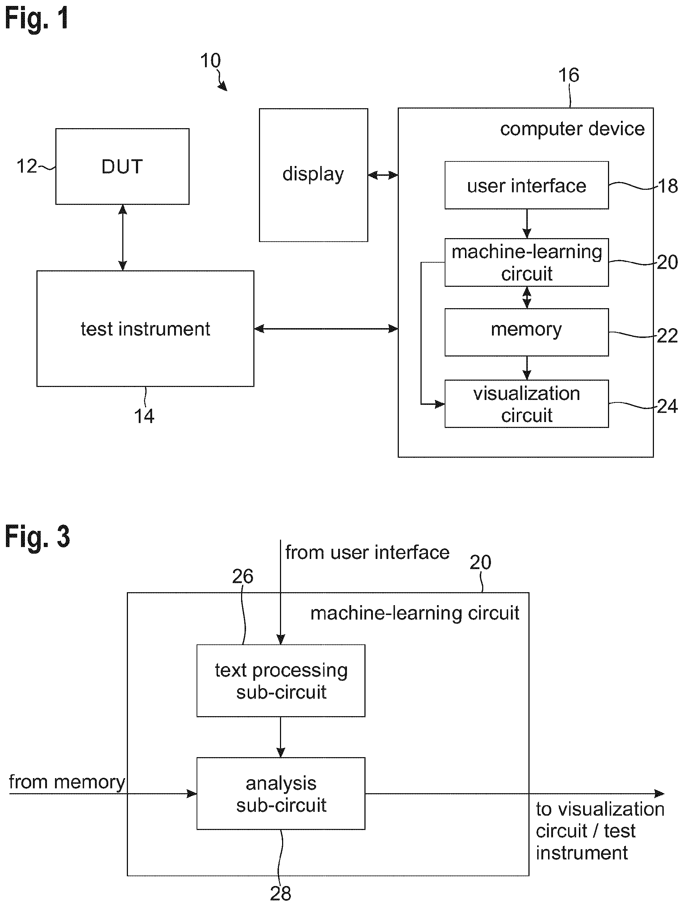

Figure 1 schematically shows a compliance testing system 10 for testing an electronic device under test 12.

In general, the device under test 12 may be any type of electronic device that is configured to generate and/or process signals, particularly radio frequency (RF) signals.

For example, the device under test 12 may be a mobile communication device, such as a smartphone, a tablet, an RF antenna, a base station, etc.

As another example, the device under test 12 may be an electronic computing device such as a personal computer, a laptop, a chip such as a central processing unit, a graphics processing unit, a game console or any other type of computer device.

In a further example, the device under test 12 may be a wireless communication device such as a WLAN router, a handheld radio, a stationary radio, etc.

As further example, the device under test 12 may be a radar system, particularly an automotive radar system, or a LiDAR system, particularly an automotive LiDAR system.

The compliance testing system 10 further comprises at least one test instrument 14 and a computer device 16.

In general, the at least one test instrument 14 is configured to perform compliance tests on the device under test 12.

The type of the at least one test instrument 14 may depend on the type of the device under test 12 to be tested.

For example, the at least one test instrument 14 may be or comprise an oscilloscope, a spectrum analyzer, a signal analyzer, a vector network analyzer, a mobile communication tester, a power meter, a signal generator such as an arbitrary waveform generator, an over-the-air test system, a radar test system, a LiDAR test system, etc.

However, it is to be understood that the compliance testing system may comprise any other suitable type of test instrument.

Hereinafter, it is assumed without restriction of generality that the compliance testing system 10 comprises one test instrument 14.

The computer device 16 is connected to the test instrument 14 in a signal-transmitting manner, i.e. by any suitable type of wired or wireless connection.

For example, the computer device 16 may be a personal computer, a laptop, a smartphone, a tablet, or any other suitable type of smart device.

The computer device 16 may comprise or be connected to peripheral input devices such as a keyboard, a computer mouse, a microphone, a trackpad, etc.

The computer device 16 comprises a user interface 18, a machine-learning circuit 20, a memory 22, and a visualization circuit 24.

The memory 22 comprises a database of compliance testing data, wherein the compliance testing data comprises information on regulations and standards for performing compliance tests on different devices under test.

It is noted that the database may, alternatively or additionally, be partially or completely integrated into a further computing device, such as a server, that is connected to the computer device 16.

Particularly, the further computing device may be connected to the computer device 16 via the Internet, via a wide area network, a local area network, or another suitable network.

In the following, the exemplary case of the database being integrated into the memory 22 of the computer device 16 is described without restriction of generality.

In general, the compliance testing system 10 is configured to assist a user in selecting and performing the appropriate compliance tests for testing the device under test 12.

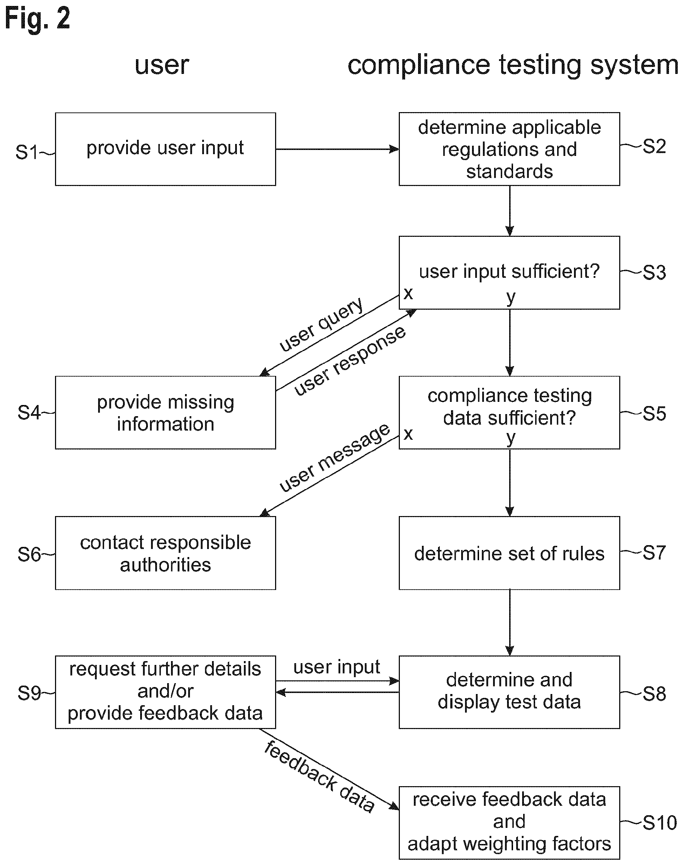

In fact, the compliance testing system 10 is configured to perform a compliance testing method that is described hereinafter with respect to Figures 2 to 4.

Figure 2 shows a flow chart of the compliance testing method, wherein the left hand side of Figure 2 labeled "user" indicates the steps performed by the user, while the right hand side labeled "compliance testing system" indicates the steps performed by the compliance testing system 10.

The user provides a user input relating to the device under test 12 to the user interface 18, i.e. the user input is received by the user interface 18 (step S1).

In fact, the user input may be received in text form and/or in speech form.

If the user input is received in speech form, the user interface 18 may have a speech-to-text functionality, such that the user can formulate the user input as speech, which is then converted into a corresponding text by the user interface 18.

Therein, any suitable speech recognition technique known in the state of the art may be used.

Accordingly, the user input is received in text form or converted into text form.

The user interface 18 is configured to forward the user input, i.e. the user input in text form, to the machine-learning circuit 20.

As is illustrated in Figure 3, the machine-learning circuit 20 comprises a text processing sub-circuit 26 that is configured to receive the user input in text form, and an analysis sub-circuit 28 that is connected to the text-processing sub-circuit 26.

The text processing sub-circuit 26 and/or the analysis sub-circuit 28 may be or comprise an artificial neural network that is configured to perform the functionalities described hereinafter.

The text processing sub-circuit 26 is configured to process the user input by means of any suitable type of language-processing technique, particularly by any suitable language-processing technique known in the state of the art, thereby extracting input data regarding the device under test 12 to be tested.

For example, the text processing sub-circuit 26 may be configured to extract key words and/or key phrases from the user input, i.e. the extracted input data may comprise key words and/or key phrases.

In a particular example, the user may input "I want to test a handheld radio for civil communication". In this case, the extracted input data may comprise the key words or rather the key phrases "handheld radio" and "civil communication".

The text processing sub-circuit 26 is configured to forward the extracted input data, particularly the extracted key words and/or key phrases, to the analysis sub-circuit 28.

The analysis sub-circuit 28 is configured to receive the input data extracted by the text processing sub-circuit 26 as well as the compliance testing data from the memory 22.

The analysis sub-circuit 28 determines, based on the user input and the compliance testing data, which regulations and standards are applicable to the device under test 12 to be tested (step S2).

In fact, the analysis sub-circuit 28 is pre-trained to determine, based on the user input and based on the compliance testing data, which regulations and standards are applicable to the device under test 12 to be tested.

More precisely, the analysis sub-circuit 28 is pre-trained to determine which regulations and standards are applicable to the device under test 12 to be tested based on the input data extracted from the user input and based on the compliance testing data.

In fact, the analysis sub-circuit 28 may match the extracted key words and/or key phrases to the compliance testing data, thereby determining which regulations and standards are applicable to the device under test 12.

The information comprised in the user input may be insufficient in order to determine the regulations and standards that are applicable to the device under test 12 and/or for selecting the appropriate compliance tests for the device under test 12.

Accordingly, the machine-learning circuit 20 or rather the analysis sub-circuit 28 may determine, based on the user input and based on the compliance testing data, whether the user input is sufficient for determining the regulations and standards that are applicable to the device under test 12 and/or for selecting the appropriate compliance tests for the device under test 12 (step S3).

In fact, the analysis sub-circuit 28 may be pre-trained to determine whether the user input is based on the input information extracted from the user input and based on the compliance testing data.

If the analysis sub-circuit 28 determines that the user input is insufficient, the analysis sub-circuit 28 may automatically determine which additional information on the device under test is required for determining the applicable regulations and standards and/or for determining the set of rules.

In the exemplary user input given above, "I want to test a handheld radio for civil communication", the analysis sub-circuit 28 may determine that the user input is insufficient, as the user input neither states the country or countries in which the handheld radio shall be utilized, nor the frequency ranges that are to be used by the handheld radio.

The analysis sub-circuit 28 may generate a user query that queries the information determined to be missing in the user input, and the user query may be visualized on the display 30 by the visualization circuit 24.

In fact, a chat comprising the user query may be opened and displayed on the display 30, wherein the user query may be formulated in natural language.

In the example given above, the user query may be a text message stating "Please specify the countries of intended use and the supported frequency ranges".

The user can then provide the missing information via the user interface 18 (step S4), and the machine-learning circuit 20 may proceed with determining the applicable regulations and standards, a set of rules, and test data as described above and hereinafter.

In fact, the analysis sub-circuit 28 may keep generating user queries for the missing information until the user has provided all necessary information on the device under test 12.

The machine-learning circuit 20 or rather the analysis sub-circuit 28 may further determine whether the compliance testing data is sufficient in order to generate the set of rules, i.e. whether the existing regulations and standards cover all relevant aspects for performing the compliance tests on the device under test 12 (step S5).

The analysis sub-circuit 28 may generate a user message if it is determined that the compliance testing data is insufficient in order to generate the set of rules, wherein the user message comprises information on data missing in the compliance testing data.

The user message may be formulated in natural language, and may be displayed on the display 30.

For example, the user message may comprise information on which regulations and standards are applicable to the device under test 12, and/or which information is missing in the existing regulations and standards.

Alternatively or additionally, the user message may comprise information on an authority responsible for the relevant regulations and standards.

In fact, the user message may comprise a pre-formulated query to the authority comprising the data or information missing in the existing regulations and standards.

Based on the user message, the user may contact the authorities responsible for the regulations and standards that are applicable to the device under test 12 (step S6).

If both the user input and the compliance testing data are sufficient, the analysis sub-circuit 28 may generate a set of rules describing how the applicable regulations and standards are to be applied to the device under test 12 (step S7).

In general, the set of rules provide a link or rather a map between the applicable regulations and standards and compliance tests to be performed on the device under test 12.

For example, the set of rules may comprise information on the types of operational parameters that need to be tested in view of the applicable regulations and standards, the operational parameter ranges that need to be tested in view of the applicable regulations and standards, and/or specific types of compliance tests that have to be performed in view of the applicable regulations and standards.

The analysis sub-circuit 28 generates test data based on the generated set of rules (step S8).

In general, the test data comprises information on compliance tests to be performed on the device under test 12 in view of the regulations and standards that are applicable to the device under test 12.

In fact, the test data may comprise the individual tests steps of the compliance tests to be performed, and/or compliance test sequences to be performed on the device under test 12 in view of the regulations and standards that are applicable to the device under test 12.

Particularly, the compliance tests to be performed may be automatically optimized by the machine-learning circuit 20 or rather by the analysis sub-circuit 28, such that the compliance tests to be performed are an optimal set of tests.

For example, the machine-learning circuit 20 or rather the analysis sub-circuit may take exclusion criteria into account for determining the order of the individual compliance tests, wherein the exclusion criteria relate to interdependencies of the individual tests.

In a particular example, if the device under test 12 passes certain compliance tests relating to a 5G sub-protocol, the corresponding 4G sub-protocols do not need to be tested, as they are automatically passed by the device under test 12.

Alternatively or additionally, the test data may comprise machine-readable instructions for the at least one test instrument 14. Based on the machine-readable instructions, the test instrument 14 may be controlled to automatically perform the compliance tests selected by the analysis sub-circuit 28.

Optionally, the test data may further comprise a list of the regulations and standards that are applicable to the device under test 12.

In a particular example, the user may input the information "mobile phone, size 12", supported frequency bands and RATs: LTE Band 89, sales region: US".

In this case, the test data may comprise the information "A device under test with above parameters has to undergo TRP measurements according to a CTIA test plan and SAR testing according to IEC-1 low - mid - high frequency channels".

The test data generated by the analysis sub-circuit 28 is forwarded to the visualization circuit 24.

The visualization circuit 24 is configured to generate visualization data associated with the test data generated by the analysis sub-circuit 28.

In the exemplary embodiment shown in Figure 1, the visualization data may be displayed on an external display 30 that is provided separately from the computer device 16 and from the test instrument 14.

However, it is also conceivable that the display 30 may be integrated into the computer device 16 or into the test instrument 14.

The user may request further details on the compliance tests to be performed and/or on the applicable regulations and standards by providing a corresponding user input to the user interface 18 (step S9).

The analysis sub-circuit 28 may update the test data according to the request of the user, and the updated test data may displayed on the display 30.

Therein, the machine-learning circuit 20, particularly the analysis sub-circuit 28 is already pre-trained to perform the functionalities described above.

However, the machine-learning circuit 20, particularly the analysis sub-circuit 28, may further be trained and/or re-trained by providing feedback data.

In fact, the feedback data may be received via the user interface 18 from the user, from an expert, or from a group of experts.

For example, the feedback data may comprises information on errors in the set of rules and/or in the test data.

The machine-learning circuit 20, particularly the analysis sub-circuit 28, may adjust its operational parameters or rather its weighting factors in order to minimize the error (step S10).

Accordingly, the machine-learning circuit 20 or rather the analysis sub-circuit 28 may be trained or re-trained by reinforcement learning.

The test data may further be forwarded to the test instrument 14, particularly if the test data comprises the machine-readable instructions.

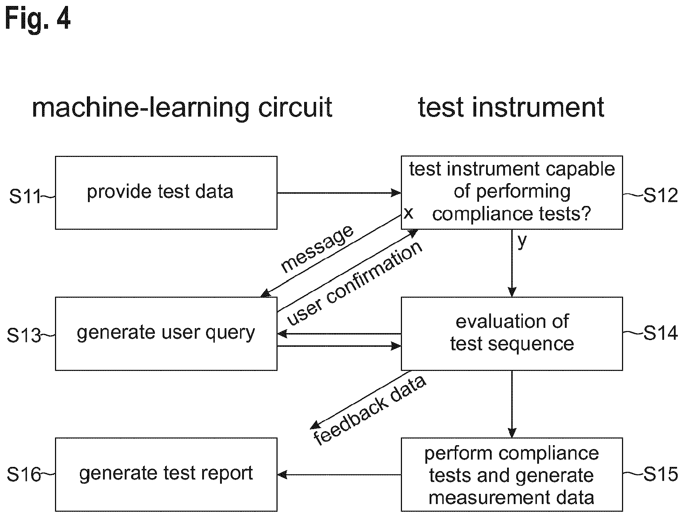

Figure 4 shows a flow chart of the corresponding further steps of the compliance testing method, wherein the left hand side of Figure 4 labeled "machine-learning circuit" indicates the steps performed by the machine-learning circuit 20, while the right hand side labeled "test instrument" indicates the steps performed by the test instrument 14, or by a measurement software or test sequencer associated with the test instrument 14.

Hereinafter, it is assumed without restriction of generality that the test instrument 14 performs the corresponding steps described below.

The machine-learning circuit 20 provides the test data to the test instrument 14 (step S11).

The test instrument 14 determines, based on the test data, whether the test instrument 14 is capable of performing the compliance tests associated with the test data on the device under test 12 (step S12).

For example, the test instrument 14 may assess whether the test instrument 14 fulfills requirements of the compliance tests relating to operational parameters of the test instrument 14, such as necessary frequency analysis ranges, necessary frequency generator ranges, a necessary bandwidth, a necessary sample rate, necessary error correction capabilities, a target measurement accuracy, etc.

If the test instrument 14 determines that the test instrument 14 is not capable of performing the compliance tests, a corresponding message may be sent to the machine-learning circuit 20 by the test instrument 14, wherein the message comprises information on reasons why the compliance tests cannot be performed.

For example, the message sent by the test instrument 14 may comprise information on insufficient operational parameter ranges or other restrictions of the test instrument 14.

A user query may be generated by the machine-learning circuit 20, particularly by the analysis sub-circuit 28, and the user query may be displayed on the display 30 (step S13).

The user query may comprise information on necessary adaptations of a test setup and/or necessary changes to the compliance tests to be performed.

For example, the user query may comprise information on necessary changes to the test setup comprising the test instrument 14, such as necessary additional test instruments or a necessary replacement of the test instrument 14.

Alternatively or additionally, the user may be informed about necessary changes to the compliance tests to be conducted, for example a reduction of a frequency range to be tested, a lowered target measurement accuracy, etc.

In fact, the user may be asked to confirm the necessary changes to the compliance tests to be conducted, and the correspondingly changed compliance tests may then be performed by the test instrument 14, particularly automatically.

It is noted that the machine-learning circuit 20 or rather the analysis sub-circuit 28 may be pre-trained to determine, based on the test data, whether the test instrument 14 is capable of performing the compliance tests associated with the test data on the device under test 12.

In this case, the user may input the corresponding relevant data regarding the test instrument 14 via the user interface 18.

If data regarding the test instrument 14 is missing in order to assess whether test instrument 14 capable of performing the compliance tests, a corresponding user query may be generated by the analysis sub-circuit 28 that prompts the user to input the missing data regarding the test instrument 14.

If the test instrument 14 determines that the test instrument 14 is capable of performing the compliance tests, the test instrument 14 may evaluate a test sequence comprised in the test data, i.e. a test sequence of the selected compliance tests (step S14).

For example, the test instrument 14 may determine that another order of the individual tests may be more optimal, that there are redundant test steps in the test sequence, that one or more test steps should be repeated, or that there are test steps missing in the test sequence.

A corresponding message may be sent to the machine-learning circuit 20 by the test instrument 14, wherein the message comprises information on suggested adaptations of the test sequence.

The machine-learning circuit 20 or rather the analysis sub-circuit 28 may generate a corresponding user query asking the user for confirmation of the adapted test sequence, and the user query may be displayed on the display 30.

The user may confirm or reject the suggested adaptations by providing a corresponding user input to the user interface 18.

If the user confirms the suggested adaptations, corresponding feedback data may be generated by the test instrument 14 that is provided to the machine-learning circuit 20.

In a specific example, if the test data comprises a test sequence with several test steps, the feedback data may comprise information on errors in the test sequence with respect to the order of the individual steps, with respect to dispensable test steps in the test sequence, and/or with respect to test steps missing in the test sequence.

The machine-learning circuit 20, particularly the analysis sub-circuit 28, may adjust its operational parameters or rather its weighting factors based on the feedback data.

The compliance tests may be performed by the test instrument 14 based on the test data, thereby obtaining measurement data (step S15).

Particularly, the compliance tests may be performed automatically based on the machine-readable instructions comprised in the test data.

The measurement data may be transmitted to the machine-learning circuit 20 or rather to the analysis sub-circuit 28, and the analysis sub-circuit 28 may generate a test report based on the measurement data (step S16).

The test report may be visualized on the display 30 by the visualization circuit 24, particularly in natural language.

Alternatively or additionally, the test report may be generated in a format that is required by the authority responsible for the regulations and standards applicable to the device under test 12.

The user may, for example, request further details and/or another format of the test report via the user interface 18, and the analysis sub-circuit 28 may adapt the test report according to the request of the user.

In other words, the user may customize the test report by providing a corresponding user input to the user interface 18.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A compliance testing system for testing an electronic device under test (12), the compliance testing system (10) comprising a user interface (18), a machine-learning circuit (20), and a database,
wherein the database comprises compliance testing data, wherein the compliance testing data comprises information on regulations and standards for performing compliance tests on different devices under test,
wherein the user interface (18) is configured to receive a user input, wherein the user input comprises text and/or speech relating to the device under test (12) to be tested,
wherein the machine-learning circuit (20) is configured to determine which regulations and standards are applicable to the device under test (12) to be tested based on the user input,
wherein the machine-learning circuit is configured to generate a set of rules describing the application of the applicable regulations and standards to the device under test that is to be tested, and
wherein the machine-learning circuit (20) is configured to generate test data based on the generated set of rules, wherein the test data comprises information on compliance tests to be performed on the device under test (12) in view of the applicable regulations and standards.

2. The compliance testing system of claim 1, wherein the test data comprises information on individual test steps and/or test sequences to be performed on the device under test (12) in view of the applicable regulations and standards, particularly wherein the test data comprises a list of the applicable regulations and standards.

3. The compliance testing system of claim 1 or 2, wherein the test data comprises machine-readable instructions for at least one test instrument (14) performing the compliance tests.

4. The compliance testing system according to any one of the preceding claims, further comprising a visualization circuit (24), wherein the visualization circuit (24) is configured to generate visualization data based on the test data.

5. The compliance testing system according to any one of the preceding claims, wherein the machine-learning circuit (20) is configured to determine whether the user input is sufficient in order to generate the set of rules and/or in order to determine which regulations and standards are applicable to the device under test (12) to be tested.

6. The compliance testing system of claim 5, wherein the machine-learning circuit (20) is configured to generate a user query if it is determined that the user input is insufficient, wherein the user query generated queries information on data missing in the user input.

7. The compliance testing system of claim 6, wherein the user query is formulated in natural language.

8. The compliance testing system according to any one of the preceding claims, wherein the machine-learning circuit (20) is configured to determine whether the compliance testing data is sufficient in order to generate the set of rules.

9. The compliance testing system of claim 8, wherein the machine-learning circuit (20) is configured to generate a user message if it is determined that the compliance testing data is insufficient in order to generate the set of rules, wherein the user message comprises information on data missing in the compliance testing data.

10. The compliance testing system of claim 9, wherein the user message comprises information on an authority responsible for the relevant regulations and standards, particularly wherein the user message comprises a pre-formulated query to the authority.

11. The compliance testing system according to any one of the preceding claims, wherein the user interface (18) is configured to receive feedback data, wherein the feedback data comprises information on errors in the set of rules and/or in the test data, and wherein the machine-learning circuit (20) is configured to adjust its operational parameters in order to minimize the error.

12. The compliance testing system according to any one of the preceding claims, wherein the compliance testing system (10) further comprises at least one test instrument (14), wherein the at least one test instrument (14) is configured to determine whether the at least one test instrument (14) is capable of performing the compliance tests to be performed on the device under test (12) based on the test data.

13. The compliance testing system of claim 12, wherein the machine-learning circuit (20) is configured to generate a user query if it is determined that the at least one test instrument (14) is not capable of performing the tests, wherein the user query comprises information on necessary adaptations of a test setup and/or necessary changes to the compliance tests to be performed.

14. The compliance testing system according to any one of the preceding claims, wherein the compliance testing system (10) further comprises at least one test instrument (14), wherein the at least one test instrument (14) is configured to perform the compliance tests to be performed on the device under test (12), thereby obtaining measurement data, and wherein the machine-learning circuit (20) is configured to generate a test report based on the measurement data, particularly wherein the test report is formulated in natural language.

15. A compliance testing method of testing an electronic device under test (12), the compliance testing method comprising the steps of
- receiving, by a user interface (18), a user input, wherein the user input comprises text and/or speech relating to the device under test (12) to be tested;
- determining, by a machine-learning circuit (20), which regulations and standards are applicable to the device under test (12) to be tested based on the user input and based on compliance testing data, wherein the compliance testing data comprises information on regulations and standards for performing compliance tests on different devices under test;
- generating, by the machine-learning circuit (20), a set of rules describing the application of the applicable regulations and standards to the device under test (12) that is to be tested; and
- generating, by the machine-learning circuit (20), test data based on the generated set of rules, wherein the test data comprises information on compliance tests to be performed on the device under test (12) in view of the applicable regulations and standards.

## Patentansprüche

1. Konformitätstestsystem zum Testen eines zu testenden elektronischen Prüflings (12), wobei das Konformitätstestsystem (10) eine Benutzerschnittstelle (18), eine Schaltung (20) für maschinelles Lernen und eine Datenbank umfasst,
wobei die Datenbank Konformitätstestdaten umfasst, wobei die Konformitätstestdaten Informationen zu Vorschriften und Normen zum Durchführen von Konformitätstests an unterschiedlichen Prüflingen umfassen,
wobei die Benutzerschnittstelle (18) konfiguriert ist, um eine Benutzereingabe zu empfangen, wobei die Benutzereingabe Text und/oder Sprache in Bezug auf den zu testenden Prüfling (12) umfasst,
wobei die Schaltung (20) für maschinelles Lernen konfiguriert ist, um basierend auf der Benutzereingabe zu ermitteln, welche Vorschriften und Normen auf den zu testenden Prüfling (12) anwendbar sind,
wobei die Schaltung für maschinelles Lernen konfiguriert ist, um einen Satz von Regeln zu erzeugen, die die Anwendung der anwendbaren Vorschriften und Normen auf den zu testenden Prüfling beschreiben, und
wobei die Schaltung (20) für maschinelles Lernen konfiguriert ist, um Testdaten basierend auf dem erzeugten Satz von Regeln zu erzeugen, wobei die Testdaten Informationen zu Konformitätstests umfassen, die im Hinblick auf die anwendbaren Vorschriften und Normen an dem zu testenden Prüfling (12) durchgeführt werden sollen.

2. Konformitätstestsystem nach Anspruch 1, wobei die Prüfdaten Informationen zu einzelnen Testschritten und/oder Testabläufen umfassen, die im Hinblick auf die anwendbaren Vorschriften und Normen an dem Prüfling (12) durchgeführt werden sollen, insbesondere wobei die Prüfdaten eine Liste der anwendbaren Vorschriften und Normen umfassen.

3. Konformitätstestsystem nach Anspruch 1 oder 2, wobei die Testdaten maschinenlesbare Anweisungen für mindestens ein Testinstrument (14) umfassen, das die Konformitätstests durchführt.

4. Konformitätstestsystem nach einem der vorstehenden Ansprüche, das ferner eine Visualisierungsschaltung (24) umfasst, wobei die Visualisierungsschaltung (24) konfiguriert ist, um Visualisierungsdaten basierend auf den Testdaten zu erzeugen.

5. Konformitätstestsystem nach einem der vorstehenden Ansprüche, wobei die Schaltung (20) für maschinelles Lernen konfiguriert ist, um zu ermitteln, ob die Benutzereingabe ausreicht, um den Satz von Regeln zu erzeugen und/oder zu ermitteln, welche Vorschriften und Normen auf den zu testenden Prüfling (12) anwendbar sind.

6. Konformitätstestsystem nach Anspruch 5, wobei die Schaltung (20) für maschinelles Lernen konfiguriert ist, um eine Benutzerabfrage zu erzeugen, wenn festgestellt wird, dass die Benutzereingabe unzureichend ist, wobei die erzeugte Benutzerabfrage Informationen zu in der Benutzereingabe fehlenden Daten abfragt.

7. Konformitätstestsystem nach Anspruch 6, wobei die Benutzerabfrage in natürlicher Sprache formuliert ist.

8. Konformitätstestsystem nach einem der vorstehenden Ansprüche, wobei die Schaltung (20) für maschinelles Lernen konfiguriert ist, um zu ermitteln, ob die Konformitätstestdaten ausreichen, um den Satz von Regeln zu erzeugen.

9. Konformitätstestsystem nach Anspruch 8, wobei die Schaltung (20) für maschinelles Lernen konfiguriert ist, um eine Benutzernachricht zu erzeugen, wenn festgestellt wird, dass die Konformitätstestdaten nicht ausreichen, um den Satz von Regeln zu erzeugen, wobei die Benutzernachricht Informationen zu in den Konformitätstestdaten fehlenden Daten umfasst.

10. Konformitätstestsystem nach Anspruch 9, wobei die Benutzernachricht Informationen zu einer für die relevanten Vorschriften und Normen zuständigen Behörde umfasst, insbesondere wobei die Benutzernachricht eine vorformulierte Anfrage an die Behörde umfasst.

11. Konformitätstestsystem nach einem der vorstehenden Ansprüche, wobei die Benutzerschnittstelle (18) konfiguriert ist, um Rückmeldedaten zu empfangen, wobei die Rückmeldedaten Informationen zu Fehlern in dem Satz von Regeln und/oder in den Testdaten umfassen und wobei die Schaltung (20) für maschinelles Lernen konfiguriert ist, um ihre Betriebsparameter anzupassen, um den Fehler zu minimieren.

12. Konformitätstestsystem nach einem der vorstehenden Ansprüche, wobei das Konformitätstestsystem (10) ferner mindestens ein Testinstrument (14) umfasst, wobei das mindestens eine Testinstrument (14) konfiguriert ist, um basierend auf den Testdaten zu ermitteln, ob das mindestens eine Testinstrument (14) in der Lage ist, die Tests durchzuführen, die an dem zu testenden Prüfling (12) durchgeführt werden sollen.

13. Konformitätstestsystem nach Anspruch 12, wobei die Schaltung (20) für maschinelles Lernen konfiguriert ist, um eine Benutzerabfrage zu erzeugen, wenn festgestellt wird, dass das mindestens eine Testinstrument (14) nicht in der Lage ist, die Tests durchzuführen, wobei die Benutzerabfrage Informationen zu notwendigen Anpassungen eines Testaufbaus und/oder notwendigen Änderungen an den durchzuführenden Konformitätstests umfasst.

14. Konformitätstestsystem nach einem der vorstehenden Ansprüche, wobei das Konformitätstestsystem (10) ferner mindestens ein Testinstrument (14) umfasst, wobei das mindestens eine Testinstrument (14) konfiguriert ist, um die an dem zu testenden Prüfling (12) durchzuführenden Konformitätstests durchzuführen, wodurch Messdaten erhalten werden, und wobei die Schaltung (20) für maschinelles Lernen konfiguriert ist, um basierend auf den Messdaten einen Testbericht zu erstellen, insbesondere wobei der Testbericht in natürlicher Sprache formuliert ist.

15. Konformitätstestverfahren zum Testen eines zu testenden elektronischen Prüflings (12), wobei das Konformitätstestverfahren die Schritte umfasst
- Empfangen, durch eine Benutzerschnittstelle (18), einer Benutzereingabe, wobei die Benutzereingabe Text und/oder Sprache in Bezug auf den zu testenden Prüfling (12) umfasst;
- Ermitteln, durch eine Schaltung (20) für maschinelles Lernen, welche Vorschriften und Normen auf den zu testenden Prüfling (12) anwendbar sind, basierend auf der Benutzereingabe und basierend auf Konformitätstestdaten, wobei die Konformitätstestdaten Informationen zu Vorschriften und Normen zum Durchführen von Konformitätstests an unterschiedlichen Prüflingen umfassen;
- Erzeugen, durch die Schaltung (20) für maschinelles Lernen, eines Satzes von Regeln, die die Anwendung der anwendbaren Vorschriften und Normen auf den zu testende Prüfling (12) beschreiben; und
- Erzeugen, durch die Schaltung (20) für maschinelles Lernen, von Testdaten basierend auf dem erzeugten Satz von Regeln, wobei die Testdaten Informationen zu Konformitätstests umfassen, die im Hinblick auf die anwendbaren Vorschriften und Normen an dem zu testenden Prüfling (12) durchgeführt werden sollen.

## Revendications

1. Système de test de conformité permettant de tester un dispositif électronique sous test (12), le système de test de conformité (10) comprenant une interface utilisateur (18), un circuit d'apprentissage automatique (20) et une base de données,
dans lequel la base de données comprend des données de test de conformité, dans lequel les données de test de conformité comprennent des informations sur les réglementations et les normes relatives à la réalisation de tests de conformité sur différents dispositifs sous test,
dans lequel l'interface utilisateur (18) est configurée pour recevoir une entrée utilisateur, dans lequel l'entrée utilisateur comprend un texte et/ou un discours relatif au dispositif sous test (12) à tester,
dans lequel le circuit d'apprentissage automatique (20) est configuré pour déterminer quelles réglementations et normes sont applicables au dispositif sous test (12) à tester en fonction de l'entrée utilisateur,
dans lequel le circuit d'apprentissage automatique est configuré pour générer un ensemble de règles décrivant l'application des réglementations et normes applicables au dispositif sous test à tester, et
dans lequel le circuit d'apprentissage automatique (20) est configuré pour générer des données de test en fonction de l'ensemble de règles générées, dans lequel les données de test comprennent des informations sur les tests de conformité à effectuer sur le dispositif sous test (12) au regard des réglementations et normes applicables.

2. Système de test de conformité selon la revendication 1, dans lequel les données de test comprennent des informations sur les étapes de test individuelles et/ou les séquences de test à effectuer sur le dispositif sous test (12) au regard des réglementations et normes applicables, en particulier dans lequel les données de test comprennent une liste des réglementations et normes applicables.

3. Système de test de conformité selon la revendication 1 ou 2, dans lequel les données de test comprennent des instructions lisibles par machine pour au moins un instrument de test (14) effectuant les tests de conformité.

4. Système de test de conformité selon l'une quelconque des revendications précédentes, comprenant en outre un circuit de visualisation (24), dans lequel le circuit de visualisation (24) est configuré pour générer des données de visualisation en fonction des données de test.

5. Système de test de conformité selon l'une quelconque des revendications précédentes, dans lequel le circuit d'apprentissage automatique (20) est configuré pour déterminer si l'entrée utilisateur est suffisante afin de générer l'ensemble de règles et/ou afin de déterminer quelles réglementations et normes sont applicables au dispositif sous test (12) à tester.

6. Système de test de conformité selon la revendication 5, dans lequel le circuit d'apprentissage automatique (20) est configuré pour générer une interrogation utilisateur s'il est déterminé que l'entrée utilisateur est insuffisante, dans lequel l'interrogation utilisateur générée demande des informations sur les données manquantes dans l'entrée utilisateur.

7. Système de test de conformité selon la revendication 6, dans lequel l'interrogation utilisateur est formulée en langage naturel.

8. Système de test de conformité selon l'une quelconque des revendications précédentes, dans lequel le circuit d'apprentissage automatique (20) est configuré pour déterminer si les données de test de conformité sont suffisantes afin de générer l'ensemble de règles.

9. Système de test de conformité selon la revendication 8, dans lequel le circuit d'apprentissage automatique (20) est configuré pour générer un message utilisateur s'il est déterminé que les données de test de conformité sont insuffisantes afin de générer l'ensemble de règles, dans lequel le message utilisateur comprend des informations sur les données manquantes dans les données de test de conformité.

10. Système de test de conformité selon la revendication 9, dans lequel le message utilisateur comprend des informations sur une autorité responsable des réglementations et normes pertinentes, en particulier dans lequel le message utilisateur comprend une interrogation préformulée adressée à l'autorité.

11. Système de test de conformité selon l'une quelconque des revendications précédentes, dans lequel l'interface utilisateur (18) est configurée pour recevoir des données en retour, dans lequel les données en retour comprennent des informations sur les erreurs dans l'ensemble de règles et/ou dans les données de test, et dans lequel le circuit d'apprentissage automatique (20) est configuré pour ajuster ses paramètres opérationnels afin de minimiser l'erreur.

12. Système de test de conformité selon l'une quelconque des revendications précédentes, dans lequel le système de test de conformité (10) comprend en outre au moins un instrument de test (14), dans lequel l'au moins un instrument de test (14) est configuré pour déterminer si l'au moins un instrument de test (14) est capable d'effectuer les tests de conformité à effectuer sur le dispositif sous test (12) en fonction des données de test.

13. Système de test de conformité selon la revendication 12, dans lequel le circuit d'apprentissage automatique (20) est configuré pour générer une requête utilisateur s'il est déterminé que l'au moins un instrument de test (14) n'est pas capable d'effectuer les tests, dans lequel la requête utilisateur comprend des informations sur les adaptations nécessaires d'une configuration de test et/ou les changements nécessaires aux tests de conformité à effectuer.

14. Système de test de conformité selon l'une quelconque des revendications précédentes, dans lequel le système de test de conformité (10) comprend en outre au moins un instrument de test (14), dans lequel l'au moins un instrument de test (14) est configuré pour effectuer les tests de conformité à effectuer sur le dispositif sous test (12), obtenant ainsi des données de mesure, et dans lequel le circuit d'apprentissage automatique (20) est configuré pour générer un rapport de test en fonction des données de mesure, en particulier dans lequel le rapport de test est formulé en langage naturel.

15. Procédé de test de conformité permettant de tester un dispositif électronique sous test (12), le procédé de test de conformité comprenant les étapes consistant à
- la réception, par une interface utilisateur (18), d'une entrée utilisateur, dans lequel l'entrée utilisateur comprend un texte et/ou un discours relatif au dispositif sous test (12) à tester ;
- la détermination, par un circuit d'apprentissage automatique (20), des réglementations et normes applicables au dispositif sous test (12) à tester en fonction de l'entrée utilisateur et en fonction des données de test de conformité, dans lequel les données de test de conformité comprennent des informations sur les réglementations et normes relatives à la réalisation de tests de conformité sur différents dispositifs sous test ;
- la génération, par le circuit d'apprentissage automatique (20), d'un ensemble de règles décrivant l'application des réglementations et normes applicables au dispositif sous test (12) à tester ; et
- la génération, par le circuit d'apprentissage automatique (20), des données de test en fonction de l'ensemble de règles générées, dans lequel les données de test comprennent des informations sur les tests de conformité à effectuer sur le dispositif sous test (12) au regard des réglementations et normes applicables.
